Europäisches Patentamt

European Patent Office

Office européen des brevets

(11) Veröffentlichungsnummer: **0 144 568 B1**

(12) **EUROPÄISCHE PATENTSCHRIFT**

(45) Veröffentlichungstag der Patentschrift: **17.06.92**

(51) Int. Cl.⁵: **G06F 7/52**

(21) Anmeldenummer: **84110830.1**

(22) Anmeldetag: **11.09.84**

(54) Multiplikationswerk und Verfahren zu dessen Betrieb.

(30) Priorität: **29.09.83 DE 3335424**

(43) Veröffentlichungstag der Anmeldung:
**19.06.85 Patentblatt 85/25**

(45) Bekanntmachung des Hinweises auf die
Patenterteilung:
**17.06.92 Patentblatt 92/25**

(84) Benannte Vertragsstaaten:
**BE DE FR GB IT**

(56) Entgegenhaltungen:
**US-A- 3 192 363**
**US-A- 4 122 527**
**US-A- 4 334 284**

**ELECTRONICS LETTERS, Band 16, Nr. 2, 17.**
**Januar 1980, Seiten 53-54; E. AMBIKAIRAJAH**
**et al.: "Technique for performing multiplica-**
**tion on a 16-bit microprocessor using an**
**extension of booth's algorithm"**

(73) Patentinhaber: **SIEMENS AKTIENGESELL-**
**SCHAFT**
**Wittelsbacherplatz 2**
**W-8000 München 2(DE)**

(72) Erfinder: **Rainer, Alois, Dipl.-Ing.**
**Millevistrasse 52/11**
**A-9500 Villach(AT)**

**Beschreibung**

Die Erfindung bezieht sich auf ein Multiplikationswerk nach dem Oberbegriff des Patentanspruchs 1 und auf ein Verfahren zu dessen Betrieb.

Ein Multiplikationswerk dieser Art ist beispielsweise in der amerikanischen Patentschrift 4,334,284 mit dem Titel "Multiplier Decoding Using Parallel MQ Register" wiedergegeben. Dabei handelt es sich um ein Multiplizierwerk mit einer Genauigkeit von n = 56 bit, bei dem jedoch, wegen der auftretenden Überlaufbits, ein 60 bit breiter Akkumulator und ein 60 bit breites Rechenwerk erforderlich sind.

Aufgabe der Erfindung ist es, ein Multiplikationswerk dieser Art anzugeben, mit dem eine hohe Arbeitsgeschwindigkeit erreichbar ist und das zur Multiplikation von im Zweierkomplement dargestellten n-stelligen binären Zahlen lediglich ein n-stelliges Rechenwerk, einen n-stelligen Akkumulator und n-stellige Register benötigt. Erfindungsgemäß wird das durch eine Ausbildung des Multiplikationswerks nach dem kennzeichnenden Teil des Patentanspruchs 1, und durch ein Verfahren zu dessen Betrieb nach dem kennzeichnenden Teil des Patentanspruch 6 erreicht.

Der mit der Erfindung erzielbare Vorteil besteht insbesondere darin, daß nur ein n-stelliges Mehrfach-Schiebewerk zur Verschiebung der vom Rechenwerk an den Akkumulator ausgegebenen Verknüpfungsergebnisse erforderlich ist.

Die Ansprüche 2 bis 5 betreffen vorteilhafte Ausgestaltungen und Weiterbildungen des Multiplikationswerks nach der Erfindung, während der Anspruch 6 auf ein bevorzugtes Verfahren zum Betrieb des erfindungsgemäßen Multiplikationswerks gerichtet ist.

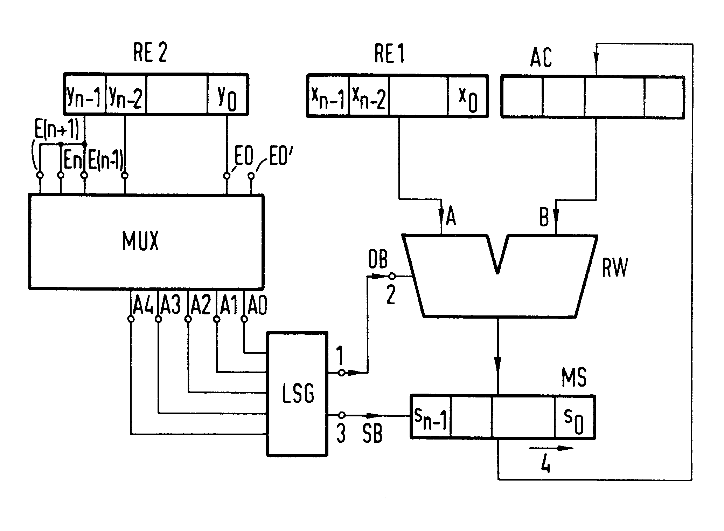

Die Erfindung wird nachfolgend anhand der Zeichnung näher erläutert. Dabei ist ein n-stelliges Register RE1 vorgesehen, das den als eine n-stellige binäre Zahl X mit den Bits $x_{n-1}$, $x_{n-2}$ ...$x_0$ im Zweierkomplement dargestellten Multiplikanden enthält. $x_{n-1}$ ist dabei das höchstwertige Bit, das durch einen Wert "1" ein negatives Vorzeichen und durch einen Wert "0" ein positives Vorzeichen der binären Zahl angibt. $x_0$ stellt das Bit niedrigster Wertigkeit dar. Der Ausgang von RE1 ist mit dem Operandeneingang A eines Rechenwerks RW verbunden, dessen zweiter Operandeneingang B mit dem Ausgang eines n-stelligen Akkumulators AC beschaltet ist. Der Ausgang von RW ist mit dem Eingang eines Mehrfach-Schiebewerks MS verbunden, dessen Ausgang mit dem Eingang des Akkumulators AC beschaltet ist.

Ein Register RE2 dient zur Aufnahme des ebenfalls als binäre Zahl im Zweierkomplement dargestellten Multiplikators Y. Auch hier bedeutet $y_{n-1}$ das Vorzeichenbit, $y_0$ das Bit niedrigster Wertigkeit. Ein Multiplexer MUX mit n+3 Eingängen E0', E0, E1 ... E(n+1) wählt jeweils fünf einander unmittelbar benachbarte Bits, z.B. $y_1$ ... $y_5$, aus und schaltet sie an seine Ausgänge A0 bis A4 durch. Aus den an A0 bis A4 jeweils abgreifbaren Bits wird über ein logisches Schaltungsglied LSG ein Operationsbefehl OB abgeleitet, der an einem ersten Ausgang 1 von LSG auftritt und dem Operationsbefehlseingang 2 des Rechenwerks RW zugeführt wird. Der Operationsbefehl OB veranlaßt das Rechenwerk, die am Operandeneingang A anliegende binäre Zahl entweder von der am Operandeneingang B anliegenden binären Zahl zu subtrahieren, die bei A anliegende Zahl zu der bei B anliegenden zu addieren oder die bei B anliegende binäre Zahl an den Ausgang von RW durchzuschalten. Weiterhin wird aus den an A0 bis A4 anliegenden Bits über LSG ein Verschiebebefehl SB abgeleitet, der an einem Ausgang 3 von LSG auftritt und einem Steuereingang des Mehrfach-Schiebewerks MS zugeführt wird. Der Verschiebebefehl SB bewirkt eine sog. arithmetische Verschiebung der im n-stelligen Mehrfach-Schiebewerk MS enthaltenen binären Zahl, um eine bestimmte Stellenanzahl, d.h. um eine oder um mehrere Stellen, jeweils nach rechts, wie durch den Pfeil 4 angedeutet ist. Werden die Bits der in MS enthaltenen binären Zahl mit $s_{n-1}$, $s_{n-2}$...$s_0$ bezeichnet, wobei $s_{n-1}$ als das höchstwertige Bit das Vorzeichen dieser Zahl angibt und $s_0$ das Bit niedrigster Wertigkeit bedeutet, so werden bei einer arithmetischen Verschiebung dieser Zahl um drei Stellen nach rechts die Bits $s_0$, $s_1$ und $s_2$ fallengelassen, während die drei frei werdenden Stellen am linken Ende von MS nunmehr jeweils mit dem Vorzeichenbit $s_{n-1}$ belegt werden. Damit steht nach dieser Verschiebung die binäre Zahl $s_{n-1}$, $s_{n-1}$, $s_{n-1}$, $s_{n-1}$, $s_{n-2}$ ...$s_3$ in MS.

Zur Multiplikation von X und Y wird nun so verfahren, daß in sämtliche Stellen des Akkumulators AC und des Mehrfach-Schiebewerks MS zunächst jeweils "0"-Bits eingegeben werden. Im Multiplexer MUX werden die an seinen Eingängen E0', E0 ...E3 liegenden Bits an seine Ausgänge A0 ... A4 durchgeschaltet, wobei am Eingang E0' ständig eine "0" anliegt. Hieraus werden in LSG Befehle OB und SB abgeleitet, wobei OB eine der drei genannten Operationen des Rechenwerks RW veranlaßt, die auf die am Operandeneingang A liegende Zahl X und auf die aus dem Akkumulator AC dem Operandeneingang B zugeführten "0"-Bits angewendet wird. In RW entsteht ein erstes Verknüpfungsergebnis $s_{n-1}$ ...$s_0$, das dem Mehrfach-Schiebewerk MS zugeführt wird. Der über LSG abgeleitete Verschiebebefehl SB veranlaßt MS, dieses erste Verknüpfungsergebnis in der bereits beschriebenen Weise um eine bestimmte Stellenzahl nach rechts arithmetisch zu verschieben. Die nunmehr in MS enthaltene Zahl, die z.B. bei einer Verschiebung um drei

Stellen die Bits $s_{n-1}$, $s_{n-1}$, $s_{n-1}$, $s_{n-1}$, $s_{n-2}$ ...$s_3$ aufweist, wird dann dem Akkumulator AC als erste Zwischensumme zugeführt.

Anschließend werden vom Multiplexer MUX die an den um zwei Stellen nach links versetzten Eingängen, d.h. an E1 ...E5, anliegenden Bits $y_1$ ...$y_5$ auf A0 bis A4 durchgeschaltet. Über LSG werden zwei neue Befehle OB und SB abgeleitet, von denen OB das Rechenwerk RW veranlaßt, die bei A anliegende Zahl X mit der bei B anliegenden, von AC zugeführten ersten Zwischensumme nach einer der drei möglichen Operationen zu verknüpfen, so daß ein zweites Verknüpfungsergebnis entsteht. Dieses wird gemäß SB um eine bestimmte Stellenzahl arithmetisch nach rechts verschoben, wobei in MS in der beschriebenen Weise eine zweite Zwischensumme entsteht, die AC zugeführt wird.

Es folgen weitere gleichartige Verfahrensschritte, wobei der Multiplexer MUX bei jedem neuen Schritt die jeweils um zwei Stellen nach links versetzten Bits des Multiplikators Y an seine Ausgänge durchschaltet.

Bei letzten Schrift werden von MUX die Bits an den letzten fünf Eingängen E(n-3), E(n-2), E(n-1), En und E(n + 1) durchgeschaltet, wobei die letzten drei Eingänge jeweils mit demselben Bit belegt sind, wie die Zeichnung zeigt. Daher sind die Bits $y_{n-3}$ ...$y_{n-1}$, $y_{n-1}$, $y_{n-1}$ an den Ausgängen A0 ...A4 abgreifbar. Die hieraus abgeleiteten Befehle 0B und SB veranlassen in RW eine Verknüpfung von X mit der sich in AC befindenden Zwischensumme und eine arithmetische Verschiebung des Verknüpfungsergebnisses in MS gemäß SB. Die hierbei in MS entstandene binäre Zahl stellt dann das Produkt der Binärzahlen X und Y dar, das aus den n am meisten signifikanten Bits besteht. Ist n ungeradzahling, so wird beim letzten Schritt E(n + 1) nicht mehr abgetastet, so daß die Bits $y_{n-4}$ ... $y_{n-1}$, $y_{n-1}$ durchgeschaltet werden.

Die Bildung der Befehle 0B und SB aus den jeweils bei A0 ...A4 abgreifbaren Bits der Zahl Y erfolgt nach folgender Tabelle, bei der die ersten fünf Spalten den in der ersten Zeile stehenden Ausgängen A0 ... A4 zugeordnet sind, während die sechste und siebente Spalte jeweils die Befehle OB und SB enthalten. Die an den Eingängen und Ausgängen von LSB gleichzeitig auftretenden Bits stehen dabei jeweils in einer Zeile.

| A4 | A3 | A2 | A1 | A0 | OB | SB |
|----|----|----|----|----|----|----|
| 0 | 0 | 0 | 0 | 0 | Ø | 2 |
| 0 | 0 | 0 | 0 | 1 | 1 | 1 |
| 0 | 0 | 0 | 1 | 0 | 1 | 1 |
| 0 | 0 | 0 | 1 | 1 | 1 | Ø |
| 0 | 0 | 1 | 0 | 0 | -1 | 1 |
| 0 | 0 | 1 | 0 | 1 | -1 | 2 |
| 0 | 0 | 1 | 1 | 0 | -1 | 2 |
| 0 | 0 | 1 | 1 | 1 | Ø | 3 |
| 0 | 1 | 0 | 0 | 0 | Ø | 3 |
| 0 | 1 | 0 | 0 | 1 | 1 | 2 |
| 0 | 1 | 0 | 1 | 0 | 1 | 2 |
| 0 | 1 | 0 | 1 | 1 | 1 | 1 |
| 0 | 1 | 1 | 0 | 0 | -1 | 2 |
| 0 | 1 | 1 | 0 | 1 | -1 | 3 |
| 0 | 1 | 1 | 1 | 0 | -1 | 3 |
| 0 | 1 | 1 | 1 | 1 | Ø | 4 |
| 1 | 0 | 0 | 0 | 0 | Ø | 4 |
| 1 | 0 | 0 | 0 | 1 | 1 | 3 |
| 1 | 0 | 0 | 1 | 0 | 1 | 3 |
| 1 | 0 | 0 | 1 | 1 | 1 | 2 |
| 1 | 0 | 1 | 0 | 0 | -1 | 1 |
| 1 | 0 | 1 | 0 | 1 | -1 | 2 |
| 1 | 0 | 1 | 1 | 0 | -1 | 2 |
| 1 | 0 | 1 | 1 | 1 | Ø | 3 |
| 1 | 1 | 0 | 0 | 0 | Ø | 3 |
| 1 | 1 | 0 | 0 | 1 | 1 | 2 |
| 1 | 1 | 0 | 1 | 0 | 1 | 2 |
| 1 | 1 | 0 | 1 | 1 | 1 | 1 |
| 1 | 1 | 1 | 0 | 0 | -1 | Ø |
| 1 | 1 | 1 | 0 | 1 | -1 | 1 |
| 1 | 1 | 1 | 1 | 0 | -1 | 1 |
| 1 | 1 | 1 | 1 | 1 | Ø | 2 |

Dabei bedeutet OB = 1, daß die Operanden an A und B addiert werden. OB = -1 bedeutet, daß der Operand an A von dem Operanden an B subtrahiert wird, während OB = 0 aussagt, daß der Operand an B direkt auf den Ausgang von RW durchgeschaltet werden soll. Die Zahlenwerte in der Spalte für SB geben jeweils unmittelbar die Anzahl der Stellen an, um die das von RW an MS ausgegebene Verknüpfungsergebnis in MS arithmetisch nach rechts verschoben werden soll.

Das Mehrfach-Schiebewerk MS ist beispielsweise so aufgebaut, wie die als "Barrel Shifter" bezeichneten Einrichtungen, die in dem Buch "Introduction to VLSI-Systems" von C.Mead und L.Conway, Addison-Wesley Publishing Comp., Reading, Mass., Okt. 1980, auf den Seiten 157 bis 161 beschrieben sind. Das logische Schaltungsglied LSG kann beispielsweise aus einem Festwertspeicher oder einer logischen Gatterschaltung bestehen.

**Patentansprüche**

1. Multiplikationswerk für n-stellige binäre Zahlen mit einem den Multiplikanden enthaltenden ersten Register (RE1), einem zur Aufnahme von Zwischensummen dienenden Akkumulator (AC), einem zur schrittweisen Verknüpfung des Multiplikanden mit der jeweils im Akkumulator enthaltenen Zwischensumme dienenden Rechenwerk (RW), dessen Operandeneingänge (A, B) mit dem ersten Register (RE1) und dem Akkumulator (AG) beschaltet sind, wobei die vom Rechenwerk (RW) jeweils zu vollziehende Operation durch die Bits eines Multiplikators bestimmt wird, der in einem zweiten, an einen Operationsbefehlseingang (2) des Rechenwerks (RW) geschalteten Register (RE2) enthalten ist, und mit einer Einrichtung, die zur Verschiebung der von dem Rechenwerk (RW) an den Akkumulator (AC) ausgegebenen Verknüpfungsergebnisse dient, **dadurch gekennzeichnet,** daß das erste Register (RE1), das zweite Register (RE2), der Akkumulator (AC) und das Rechenwerk (RW) n-stellig ausgebildet sind, daß das zweite Register (RE2) mit einem Multiplexer (MUX) verbunden ist, der die Bits von jeweils fünf nebeneinanderliegenden Multiplikatorstellen an die Eingänge eines logischen Schaltungsgliedes (LSG) durchschaltet, das einen ersten und einen zweiten Ausgang (1, 3) besitzt, wobei der erste Ausgang (1) mit dem Operationsbefehlseingang (2) verbunden ist und der zweite Ausgang (3) an einen Steuereingang der genannten Einrichtung geführt ist, die als ein n-stelliges Mehrfach-Schiebewerk (MS) ausgebildet ist, und daß das n-stellige Mehrfach-Schiebewerk (MS) zwischen den Ausgang des Rechenwerks (RW) und den Eingang des Akkumulators (AC) eingefügt ist.

2.  Multiplikationswerk nach Anspruch 1, **dadurch gekennzeichnet,** daß der erste Eingang (EO') des Multiplexers (MUX) mit einer logischen "0" beschaltet ist, daß die nächsten n Eingänge (EO ...E(n-1)) desselben mit den n Bits ($y_0$ ... $y_{n-1}$) des Multiplikators (Y) belegt sind und daß zwei weitere Eingänge (En, E(n+1)) des Multiplexers ebenfalls mit dem höchstwertigen Bit ($y_{n-1}$) des Multiplikators (Y) beschaltet sind.

3.  Multiplikationswerk nach Anspruch 1 oder 2, **dadurch gekennzeichnet,** daß das Mehrfach-Schiebewerk (MS) so ausgebildet ist, daß arithmetische Verschiebungen der Verknüpfungsergebnisse durchführbar sind.

4.  Multiplikationswerk nach einem der Ansprüche 1 bis 3, **dadurch gekennzeichnet,** daß das logische Schaltungsglied (LSG) als Festwertspeicher ausgebildet ist.

5.  Multiplikationswerk nach einem der Ansprüche 1 bis 4, **dadurch gekennzeichnet,** daß das erste und zweite Register (RE1, RE2), der Akkumulator (AC), das Rechenwerk (RW) und das Mehrfach-Schiebewerk (MS) jeweils n-stellig ausgebildet sind.

6.  Verfahren, zum Betrieb des Multiplikationswerks nach einem der Ansprüche 1 bis 5, **dadurch gekennzeichnet,** daß der n-stellige Akkumulator (AC) und das n-stellige Mehrfach-Schiebewerk (MS) in allen Stellen zunächst mit "0"-Bits belegt werden, daß in einem ersten Schritt die Bits an den ersten fünf Eingängen (E0', E0 ... E3) des Multiplexers (MUX) an dessen Ausgänge (A0 ... A4) durchgeschaltet werden, daß von diesen durchgeschalteten Bits in dem logischen Schaltungsglied (LSG) ein Operationsbefehl (OB) für das n-stellige Rechenwerk (RW) und ein Verschiebebefehl (SB) für das Mehrfach-Schiebewerk (MS) abgeleitet werden, daß im n-stelligen Rechenwerk eine Verknüpfung des Multiplikanden mit dem Akkumulatorinhalt gemäß dem Operationsbefehl (OB) vorgenommen wird, daß das Verknüpfungsergebnis in dem n-stelligen Mehrfach-Schiebewerk (MS) um eine dem Verschiebebefehl (SB) entsprechende Anzahl von Stellen arithmetisch verschoben wird, daß die insoweit in dem n-stelligen Mehrfach-Schiebewerk entstandene Zwischensumme in den n-stelligen Akkumulator (AC) übertragen wird, daß sich ein zweiter Schritt anschließt, der entsprechend dem ersten Schritt abläuft, jedoch unter Durchschaltung derjenigen Bits des Multiplikators (Y) im Multiplexer (MUX), die um zwei Eingänge gegenüber den im ersten Schritt durchgeschalteten Bits versetzt sind, sowie unter Verknüpfung des Multiplikanden mit der ersten Zwischensumme im n-stelligen Rechenwerk (RW), daß sich weitere Schritte anschließen, bei denen jeweils die im Multiplexer (MUX) durchgeschalteten Bits des Multiplikators (Y) gegenüber dem vorhergehenden Schritt um zwei Stellen versetzt sind, wobei im n-stelligen Rechenwerk jeweils eine Verknüpfung des Multiplikanden (X) mit der beim vorhergehenden Schritt erhaltenen Zwischensumme vorgenommen wird, und daß die bei der Durchschaltung der an den letzten fünf Eingängen (E(n-3), E(n-2), E(n-1), En und E(n+1)) des Multiplexers (MUX) anliegenden Bits des Multiplikators (Y) im n-stelligen Mehrfach-Schiebewerk (MS) erhaltene binäre Zahl das Ergebnis darstellt.

**Claims**

5

1. Multiplication unit for n-place binary numbers, having a first register (RE1) containing the multiplicand, an accumulator (AC) serving for accepting intermediate sums, an arithmetic unit (RW) serving for step-by-step logical combination of the multiplicand and the intermediate sum respectively contained in the accumulator and whose operand inputs (A, B) are connected to the first register (RE1) and the accumulator (AC), the operation respectively to be carried out by the arithmetic unit (RW) being determined by the bits of a multiplier which is contained in a second register (RE2) connected to an operation instruction input (2) of the arithmetic unit (RW), and having a device which serves for shifting the results of logical combinations output by the arithmetic unit (RW) for the accumulator (AC), characterised in that the first register (RE1), the second register (RE2), the accumulator (AC) and the arithmetic unit (RW) are constructed with n places, in that the second register (RE2) is connected to a multiplexer (MUX) which switches through the bits of respectively five adjacent multiplier places to the inputs of a logical circuit element (LSG) which has a first and a second output (1, 3), the first output (1) being connected to the operation instruction input (2) and the second output (3) being connected to a control input of the said device, which is constructed as an n-place multiple shift unit (MS), and in that the n-place multiple shift unit (MS) is inserted between the output of the arithmetic unit (RW) and the input of the accumulator (AC).

2. Multiplication unit according to Claim 1, characterised in that the first input (EO') of the multiplexer (MUX) is connected to a logic "O", in that the next n inputs (EO ... E(n-1)) of the same are occupied by the n bits ($y_0$ ... $y_{n-1}$) of the multiplier (Y), and in that two further inputs (En, E(n + 1)) of the multiplexer are likewise connected to the highest-order bit ($y_{n-1}$) of the multiplier (Y).

3. Multiplication unit according to Claim 1 or 2, characterised in that the multiple shift unit (MS) is constructed such that arithmetic shifts of the results of logical combinations can be carried out.

4. Multiplication unit according to one of Claims 1 to 3, characterised in that the logical circuit element (LSG) is constructed as a read-only memory.

5. Multiplication unit according to one of Claims 1 to 4, characterised in that the first and second registers (RE1, RE2), the accumulator (AC), the arithmetic unit (RW) and the multiple shift units (MS) are constructed in each case with n-places.

6. Method for operating the multiplication unit according to one of Claims 1 to 5, characterised in that the n-place accumulator (AC) and the n-place multiple shift unit (MS) are initially occupied by "0" bits in all places, in that in a first step the bits at the first five inputs (E0', E0 ... E3) of the multiplexer (MUX) are switched through to the outputs (A0 ... A4) thereof, in that an operation instruction (OB) for the n-place arithmetic unit (RW) and a shift instruction (SB) for the multiple shift unit (MS) are derived from these switched-through bits in the logical circuit element (LSG), in that a logical combination of the multiplicand with the accumulator contents is undertaken in the n-place arithmetic unit in accordance with the operation instruction (OB), in that the result of logical combinations in the n-place multiple shift unit (MS) is arithmetically shifted by a number of places which corresponds to the shift instruction (SB), in that the intermediate sum produced thus far in the n-place multiple shift unit is transferred into the n-place accumulator (AC), in that a second step follows which proceeds in accordance with the first step but with switching through of those bits of the multiplier (Y) in the multiplexer (MUX) which are shifted by two inputs with respect to the bits switched through in the first step, and with logical combination of the multiplicand and the first intermediate sum in the n-place arithmetic unit (RW), in that further steps follow in which in each case the bits of the multiplier (Y) that are switched through in the multiplexer (MUX) are shifted with respect to the preceding step by two places, a logical combination of the multiplicand (X) and the intermediate sum obtained in the preceding step being undertaken in each case in the n-place arithmetic unit, and in that the result is represented by the binary number obtained in the n-place multiple shift unit (MS) upon switching through the bits of the multiplier (Y) that are present at the last five inputs (E(n-3), E(n-2), E(n-1), En and E(n + 1)) of the multiplexer (MUX).

**Revendications**

1. Dispositif de multiplication pour des nombres binaires à n chiffres, comportant un premier registre (RE1) contenant le multiplicande, un accumulateur (AC) utilisé pour la réception de sommes intermédiaires, une unité de calcul (RW) utilisée pour combiner pas-à-pas le multiplicande à la somme intermédiaire contenue dans l'accumulateur, et dont les entrées d'opérandes (A,B) sont raccordées au premier registre (RE1) et à l'accumulateur (AC), l'opération devant être exécutée par l'unité de calcul (RW) étant déterminée par les bits d'un multiplicateur qui est contenu dans un second registre (RE2) raccordé à une entrée (2) d'instructions de fonctionnement de l'unité de calcul (RW), et comportant un dispositif qui sert à décaler les résultats de combinaison délivrés par l'unité de calcul (RW) à l'accumulateur (AC), caractérisé par le fait que le premier registre (RE1), le second registre (RE2), l'accumulateur (AC) et l'unité de calcul (RW) sont conçus pour n chiffres, que le second registre (RE2) est raccordé à un multiplexeur (MUX) qui transfère les bits de respectivement cinq chiffres juxtaposés du multiplicateur, aux entrées d'un circuit logique (LSG) qui possède des première et seconde sorties (1,3), la première sortie (1) étant raccordée à l'entrée (2) d'instructions de fonctionnement, tandis que la seconde sortie (3) est raccordée à une entrée de commande dudit dispositif, qui est agencé sous la forme d'une unité de transfert multiple (MS) à n chiffres, et que l'unité de transfert multiple (MS) à n chiffres est insérée entre la sortie de l'unité de calcul (RW) et l'entrée de l'accumulateur (AC).

2. Dispositif de multiplication suivant la revendication 1, caractérisé par le fait que la première entrée (EO') du multiplexeur (MUX) est alimentée par un "0" logique, que les n entrées suivantes (EO.. E(n-1)) de ce multiplexeur sont occupées par les n bits ($Y_0...y_{n-1}$) du multiplicateur (Y), et que deux entrées supplémentaires (En, E(n + 1)) du multiplexeur sont également alimentées par le bit de poids maximum ($Y_{n-1}$) du multiplicateur (Y).

3. Dispositif de multiplication suivant la revendication 1 ou 2, caractérisé par le fait que l'unité de transfert multiple (MS) est agencée de manière que des transferts arithmétiques des résultats de combinaison puissent être exécutés.

4. Dispositif de multiplication suivant l'une des revendications 1 à 3, caractérisé par le fait que le circuit logique (LSG) est réalisé sous la forme d'une mémoire morte.

5. Dispositif de multiplication suivant l'une des revendications 1 à 4, caractérisé par le fait que les premier et second registres (RE1,RE2), l'accumulateur (AC), l'unité de calcul (RW) et l'unité de transfert multiple (MS) sont agencés respectivement pour n chiffres.

6. Procédé pour faire fonctionner le dispositif de multiplication suivant l'une des revendications 1 à 5, caractérisé par le fait que tous les chiffres de l'accumulateur à n chiffres (AC) et de l'unité de transfert multiple à n chiffres (MS) sont occupés tout d'abord par des bits "0", que lors d'un premier pas, les bits présents au niveau des cinq premières entrées (E0',E0...E3) du multiplexeur (MUX) sont transmis aux sorties (A0...A4) de ce dernier, qu'une instruction d'opération (OB) pour l'unité de calcul à n chiffres (RW) et une instruction de transfert (SB) pour l'unité de transfert multiple (MS) sont obtenues à partir de ces bits transmis, dans le circuit logique (LSG), qu'une combinaison du multiplicande avec le contenu de l'accumulateur est exécutée conformément à l'instruction d'opération (OB), dans l'unité de calcul à n chiffres, que le résultat de la combinaison est décalé arithmétiquement dans l'unité de transfert multiple à n chiffres (MS), d'un nombre de chiffres correspondant à l'instruction de transfert (SB), que la somme intermédiaire, obtenue de cette manière dans l'unité de transfert multiple à n chiffres, est transférée dans l'accumulateur à n chiffres (AC), qu'un second pas est alors mis en oeuvre, qui se déroule conformément au premier pas, mais avec un transfert des bits du multiplicateur (Y) présent dans le multiplexeur (MUX), qui sont décalés de deux entrées par rapport aux bits transmis lors du premier pas, ainsi que moyennant la combinaison du multiplicande à la première somme intermédiaire dans l'unité de calcul à n chiffres (RW), que d'autres pas sont ensuite mis en oeuvre, lors desquels respectivement les bits du multiplicateur (Y), transmis dans le multiplexeur (MUX), sont respectivement décalés de deux positions par rapport au pas précédent, une combinaison du multiplicande (X) avec la somme intermédiaire obtenue lors du pas précédent étant respectivement exécutée dans l'unité de calcul à n chiffres, et que le nombre binaire, obtenu lors de la transmission des bits du multiplicateur (Y), appliqués aux cinq dernières entrées (E(n-3), E(n-2), E(n-1), En et E(n + 1)) du multiplexeur (MUX), dans l'unité de transfert multiple à n chiffres (MS), représente le résultat.